(19) Europäisches Patentamt
European Patent Office
Office européen des brevets

(11) **EP 1 486 465 B1**

(12) **FASCICULE DE BREVET EUROPEEN**

(45) Date de publication et mention
de la délivrance du brevet:
**10.12.2008 Bulletin 2008/50**

(51) Int Cl.:
*C02F 3/02* *(2006.01)*     *C02F 3/12* *(2006.01)*
*C02F 3/30* *(2006.01)*     *C02F 11/02* *(2006.01)*
*C02F 11/12* *(2006.01)*     *C02F 11/14* *(2006.01)*

(21) Numéro de dépôt: **03291437.6**

(22) Date de dépôt: **13.06.2003**

(54) **Procédé de traitement biologique d'effluents**

**Biologisches Abwasserreinigungsverfahren**

**Process for biological treatment of effluents**

(84) Etats contractants désignés:
**AT BE BG CH CY CZ DE DK EE ES FI FR GB GR
HU IE IT LI LU MC NL PT RO SE SI SK TR**

(43) Date de publication de la demande:
**15.12.2004 Bulletin 2004/51**

(73) Titulaire: **Ondeo Industrial Solutions
92420 Vaucresson (FR)**

(72) Inventeur: **Delporte, Claude
92500 Rueil-Malmaison (FR)**

(74) Mandataire: **Vaillant, Jeanne et al
Ernest Gutmann - Yves Plasseraud S.A.S.
3, rue Auber
75009 Paris (FR)**

(56) Documents cités:
**US-A- 5 196 111**     **US-A- 5 288 405**
**US-A- 5 401 412**     **US-A- 5 833 856**
**US-A- 6 045 695**

- **PATENT ABSTRACTS OF JAPAN vol. 1996, no.
07, 31 juillet 1996 (1996-07-31) -& JP 08 071591 A
(KUBOTA CORP), 19 mars 1996 (1996-03-19)**

**Description**

La présente invention concerne un procédé de traitement biologique des effluents pollués en vue de leur épuration, tels que notamment, mais non exclusivement des eaux résiduaires industrielles et urbaines.

Dans les traitements biologiques classiques, utilisés par exemple dans des stations d'épuration des effluents liquides, on met en contact ces effluents avec une biomasse (bactéries). La mise en oeuvre de certains processus biologiques nécessite de l'oxygène (oxygène de l'air ou/et oxygène pur) pour l'oxydation de la pollution carbonée et la nitrification de la pollution azotée. En revanche, d'autres processus biologiques s'effectuent en l'absence d'oxygène (zone anoxique pour la dénitrification et zone anaérobie pour la déphosphatation) tels que ceux mis en oeuvre pour l'élimination des nitrites, des nitrates et partiellement du phosphore. Les bactéries puisent l'énergie dont elles ont besoin pour survivre et se reproduire dans les matières organiques contenues dans les eaux résiduaires. Ainsi l'épuration est assurée par action des bactéries sur les matières organiques transformant ces dernières en gaz carbonique, en azote et en eau.

Bien que de tels procédés assurent une bonne épuration de l'eau, ils conduisent cependant à une augmentation progressive de la quantité de biomasse formant des boues très organiques qu'il faut généralement concentrer par épaississement et déshydratation avant de les éliminer par épandage agricole par compostage, mise en décharge ou incinération.

Les eaux résiduaires industrielles et urbaines augmentant sans cesse, la quantité de boues organiques générées par les installations de traitement est de plus en plus importante et pose un véritable problème quant à leur recyclage. En effet, les méthodes de recyclage précitées nécessitent la mise en oeuvre de moyens complexes et coûteux.

A ce jour, de nombreuses propositions visent à améliorer les procédés de traitement pour que ceux-ci génèrent moins de boues résiduelles. Une proposition consiste à hydrolyser partiellement les boues, c'est-à-dire détruire une partie des micro-organismes qui composent les boues en les rendant partiellement solubles. Les produits issus de l'hydrolyse qui contiennent des composés organiques solubles peuvent alors être renvoyés en tête du traitement biologique, au cours duquel les micro-organismes vont traiter les micro-organismes hydrolysés. Une technique répandue consiste à effectuer une hydrolyse basique ou acide à l'aide d'agents chimiques éventuellement couplée à une élévation de température. Cependant, cette technique d'hydrolyse nécessite le réajustement du pH et de la température de la solution avant sa réinjection dans le ou les bassins biologiques. Un autre inconvénient de ce type d'hydrolyse est d'augmenter la salinité des boues hydrolysées ce qui peut conduire à un dysfonctionnement de l'étape de traitement biologique. Certains procédés, notamment ceux décrits dans le document US-A-4.915.840, mettent en oeuvre une étape supplémentaire de digestion biologique d'une partie de la matière organique. Cette digestion, qui en outre doit être effectuée dans des conditions de température déterminée, complique l'ensemble du dispositif de traitement.

Une autre solution pour éliminer les boues au cours du traitement des effluents consiste à installer un broyeur dans la boucle de recirculation de la liqueur mixte provenant du ou des bassins de traitement biologique. Ceci permet de provoquer l'éclatement d'une partie des cellules bactériennes constituant lesdites boues. La technologie utilisée, telle, par exemple, qu'un broyage mécanique, un broyage par compression / détente ou par sonochimie, provoque l'éclatement d'une partie des cellules bactériennes constituant lesdites boues. Cette technique est généralement simple à mettre en oeuvre mais présente l'inconvénient de ne réduire que faiblement la production de boues en excès.

D'autres propositions sont basées sur l'action d'agents oxydants sur des mélanges boueux recyclés dans un bassin biologique afin de réduire la production de boues en excès. Le procédé décrit dans la demande de brevet US-A-5.858.222 propose ainsi de faire agir de l'ozone sur le mélange boueux qui comprend des particules de boue organiques et de l'eau. L'inconvénient principal de l'ozone tient aux difficultés inhérentes à l'utilisation même de ce réactif très oxydant et à son coût. D'autres oxydants tels que de l'air, du péroxyde d'hydrogène ou de l'oxygène sous pression pouvant être utilisés de façon classique ou dans des méthodes d'oxydation par voie humide (OVH, en anglais « Wet Air Oxidation ») telles que décrites, par exemple, dans le document FR-A- 2 774 980, ne sont pas assez efficaces seuls : ils doivent être associés à un chauffage, à un ajustement du pH et/ou un catalyseur, ce qui complique et augmente également le coût de ces procédés.

La présente invention a pour objet un perfectionnement des procédés de traitement biologique d'effluents pour diminuer voire éliminer la quantité des boues en excès produites par ceux-ci, et qui ne présente pas les inconvénients des techniques antérieures précitées.

L'invention propose à cet effet un procédé de traitement biologique d'effluents bruts pollués, tels que des eaux résiduaires industrielles et urbaines, comprenant :

- au moins une étape de traitement biologique des effluents bruts conduisant à la production de mélanges boueux comportant des boues organiques et de l'eau, et
- une étape de contrôle de la croissance bactérienne d'au moins une partie des mélanges boueux et d'au moins une partie des effluents bruts à traiter, la croissance bactérienne des mélanges boueux étant contrôlée par la mesure et la régulation du potentiel d'oxydo-réduction desdits mélanges boueux contenues dans un bassin (7') de l'étape de contrôle, caractérisé en ce que le potentiel d'oxydo-réduction des mélanges boueux est régulé par des alternances rapides et fréquentes du potentiel autour d'une valeur prédéterminée et comprise entre -150 mV et +150 mV, par rapport à l'électrode normale à hydrogène, afin de limiter ou d'empêcher la production des boues organiques.

L'étape de contrôle consiste à empêcher le développement et la croissance bactérienne dans le bassin de contrôle par une inhibition des processus biologiques de croissance. L'étape de contrôle est réalisée dans au moins un bassin de réception de la partie des mélanges boueux et de la partie des effluents bruts à traiter.

Dans une variante de mise en oeuvre, le procédé comprend :

- une étape de traitement biologique aérobie des effluents bruts dans au moins un bassin aéré,
- et une étape de clarification des mélanges boueux dans au moins un clarificateur.

Le procédé peut en outre éventuellement comprendre une étape d'épaississement des boues dans au moins un épaississeur.

Les mélanges boueux sont prélevés depuis au moins l'une des trois étapes précitées pour être soumis au contrôle de la croissance bactérienne.

Dans une autre variante, le procédé de traitement biologique comprend une étape supplémentaire de traitement biologique des effluents bruts dans au moins un bassin non aéré. Les mélanges boueux sont prélevés depuis au moins cette étape supplémentaire ou l'une des trois étapes précitées (traitement biologique en bassin(s) aéré(s), clarification, épaississement) pour être soumis au contrôle de la croissance bactérienne.

Dans une autre variante, le procédé de traitement biologique comprend une deuxième étape de traitement biologique aérobie des effluents bruts dans au moins un bassin aéré. Les mélanges boueux peuvent alors être prélevés depuis au moins cette autre étape ou l'une des 4 étapes précitées (traitement biologique en bassin(s) aéré(s), traitement biologique en bassin(s) non aéré(s), clarification, épaississement) pour être soumis au contrôle de la croissance bactérienne.

Dans une autre variante, l'étape de clarification est remplacée par une étape de filtration membranaire des mélanges boueux produits par les étapes de traitements biologiques. Les mélanges boueux soumis à l'étape de contrôle de la croissance bactérienne peuvent également être prélevés depuis cette étape de filtration.

Selon des caractéristiques particulières de l'invention, au moins une partie des mélanges boueux peut être introduite directement dans le bassin de contrôle de la croissance bactérienne ou peut être recyclée en amont du bassin de contrôle de la croissance bactérienne dans les effluents bruts.

Une caractéristique intéressante de l'invention est que la croissance bactérienne du mélange boueux contenu dans le bassin de l'étape de contrôle est contrôlée par la mesure et la régulation du potentiel d'oxydo-réduction de ce mélange boueux. Le potentiel d'oxydo-réduction du mélange boueux contenu dans le bassin de l'étape de contrôle est régulé autour d'une valeur de potentiel d'oxydo-réduction proche de zéro correspondant à l'équilibre entre milieu oxydant et milieu réducteur dans le mélange boueux. Au cours du contrôle de la croissance bactérienne, le potentiel d'oxydo-réduction du mélange boueux est régulé pour être maintenu entre une valeur négative égale à environ - 50mV par rapport à l'électrode normale à hydrogène et une valeur positive égale à environ + 50mV par rapport à l'électrode normale à hydrogène. Le potentiel d'oxydo-réduction du mélange boueux peut également être régulé pour être maintenu entre une valeur négative égale à environ - 20mV par rapport à l'électrode normale à hydrogène et une valeur positive égale à environ + 20mV par rapport à l'électrode normale à hydrogène.

Au cours du contrôle de la croissance bactérienne, le potentiel d'oxydo-réduction du mélange boueux est régulé pour être maintenu dans un intervalle qui est d'environ plus ou moins 50 mV par rapport à la valeur de potentiel prédéterminée, l'écart de 50 mV étant exprimée en fonction de l'électrode normale à hydrogène. Le potentiel d'oxydo-réduction du mélange boueux peut également être régulé pour être maintenu dans un intervalle qui est d'environ plus ou moins 20 mV par rapport à la valeur de potentiel prédéterminée, l'écart de 20 mV étant exprimée en fonction l'électrode normale à hydrogène.

La mesure de la valeur du potentiel d'oxydo-réduction est obtenue à partir de moyens de mesure comportant au moins une électrode de mesure en platine ou en or et une électrode de référence Ag/AgCl ou $Hg/HgCl_2$ (électrode au calomel). Les moyens de mesure peuvent être un capteur de mesure coopérant avec un automate qui régule le potentiel d'oxydo-réduction. La régulation du potentiel d'oxydo-réduction peut être obtenue par un contrôle de l'alimentation des effluents bruts à traiter, par exemple par régulation du débit d'alimentation de ces effluents, entrant directement dans le bassin de contrôle de la croissance bactérienne. La régulation du potentiel d'oxydo-réduction peut également être obtenue par un contrôle de l'évacuation de la liqueur du bassin de contrôle vers au moins un bassin aéré ou au moins un bassin non aéré. Ce contrôle peut consister en une régulation du débit d'évacuation de la liqueur du bassin de contrôle vers au moins un bassin aéré ou au moins un bassin non aéré. Une autre possibilité est de réguler le potentiel d'oxydo-réduction par une aération séquencée à l'air ou à l'oxygène pur du bassin de contrôle. Dans une variante de mise en oeuvre d'un procédé selon l'invention, la régulation du potentiel d'oxydo-réduction est réalisée par un contrôle de l'alimentation en mélanges boueux recyclés dans le bassin de contrôle depuis au moins un bassin aéré, au moins un bassin non aéré, au moins un clarificateur et/ou au moins un épaississeur.

Une autre caractéristique de l'invention est que la circulation des effluents entre au moins deux étapes de traitement biologique et/ou entre l'étape de contrôle et au moins une étape de traitement biologique peut être effectuée dans un sens ou à l'opposé.

Dans une autre variante de mise en oeuvre du procédé, l'étape de contrôle comporte :

- une addition de réactifs tels par exemple que de la soude, un acide ou un oxydant,
- une injection de vapeur,
- une augmentation de la température du milieu,
- un cisaillement mécanique du mélange boueux, par exemple, par une turbine à grande vitesse ou par un hydro-éjecteur.

Selon une caractéristique intéressante de l'invantion, l'étape de contrôle peut être réalisée dans au moins un bassin tampon d'une installation de traitement.

L'invention sera mieux comprise et d'autres caractéristiques, détails et avantages de celle-ci apparaîtront plus clairement à la lecture de la description qui suit, faite à titre d'exemple en référence aux dessins annexés, dans lesquels :

- la figure 1 est un organigramme représentant un premier mode de mise en oeuvre du procédé de traitement d'effluents selon l'invention ;
- la figure 2 est un organigramme représentant un autre mode de mise en oeuvre du procédé selon l'invention ;
- la figure 3 est un organigramme représentant un troisième mode de mise en oeuvre du procédé selon l'invention ;
- la figure 4 est un organigramme représentant un quatrième mode de mise en oeuvre du procédé l'invention ;
- la figure 5 est un organigramme représentant un cinquième mode de mise en oeuvre du procédé l'invention.

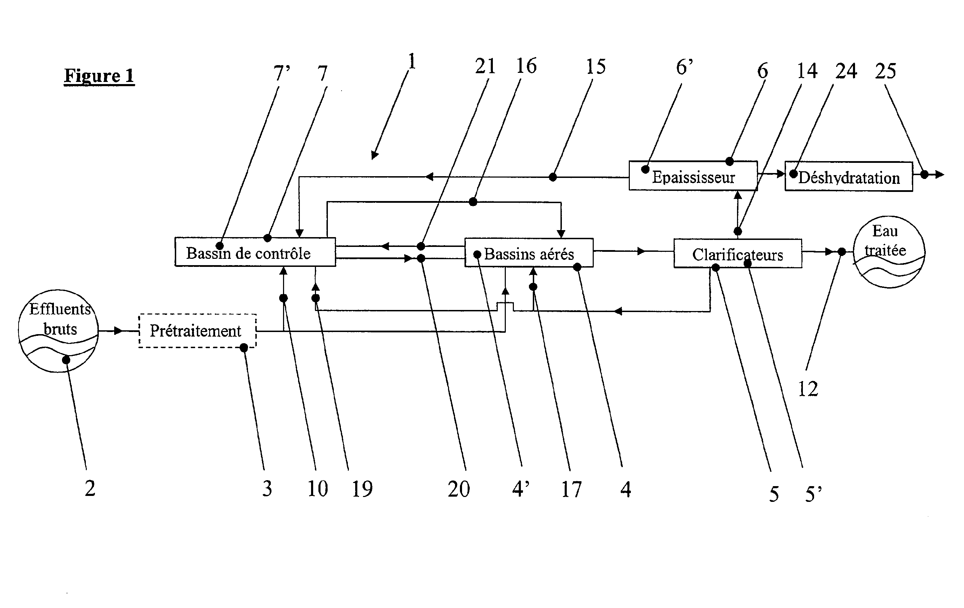

Le procédé de la figure 1, qui peut être mis en oeuvre dans une station 1 d'épuration d'eaux résiduaires industrielles et urbaines, peut comprendre cinq étapes de traitement : une étape de prétraitement 3 des effluents bruts 2 qui n'est pas toujours requise, une étape aérobie de traitement biologique 4 dans plusieurs bassins aérés (référencés 4') générant un mélange boueux comprenant des boues organiques et de l'eau, une étape de clarification 5 du mélange boueux dans plusieurs clarificateurs (également référencés 5'), une étape d'épaississement 6 des boues dans un épaississeur (référencé 6') et une étape de contrôle 7 de la croissance bactérienne dans un bassin de contrôle (référencé 7').

L'étape de prétraitement 3 consiste à éliminer, si nécessaire, des matières volumineuses par exemple par dégrillage ou par tamisage, à éliminer des sables et des graisses par exemple en utilisant un dégraisseur, déshuileur ou un désableur, ou encore à éliminer des matières en suspension ou des hydrocarbures par exemple par une décantation primaire ou par flottation. Les effluents bruts pouvant être prélevés en sortie de cette étape 3 ont généralement un potentiel d'oxydo-réduction négatif comme les effluents bruts 2 pouvant être prélevés directement depuis une fosse de relèvement (non représentée) des effluents bruts pollués.

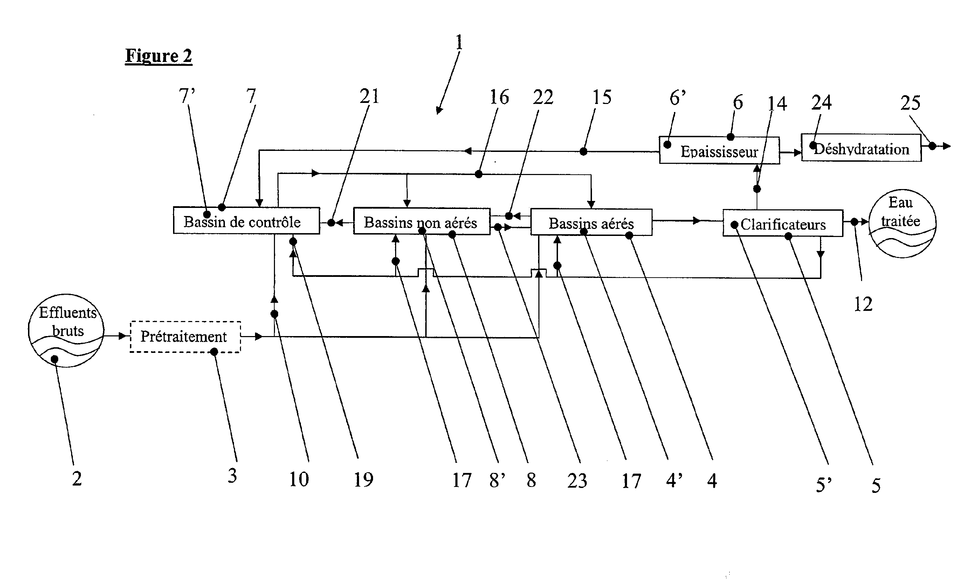

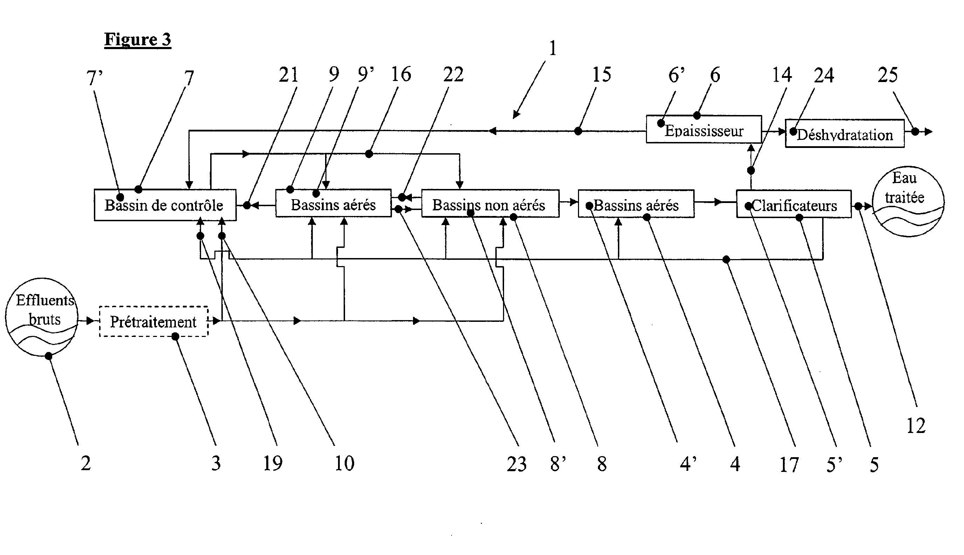

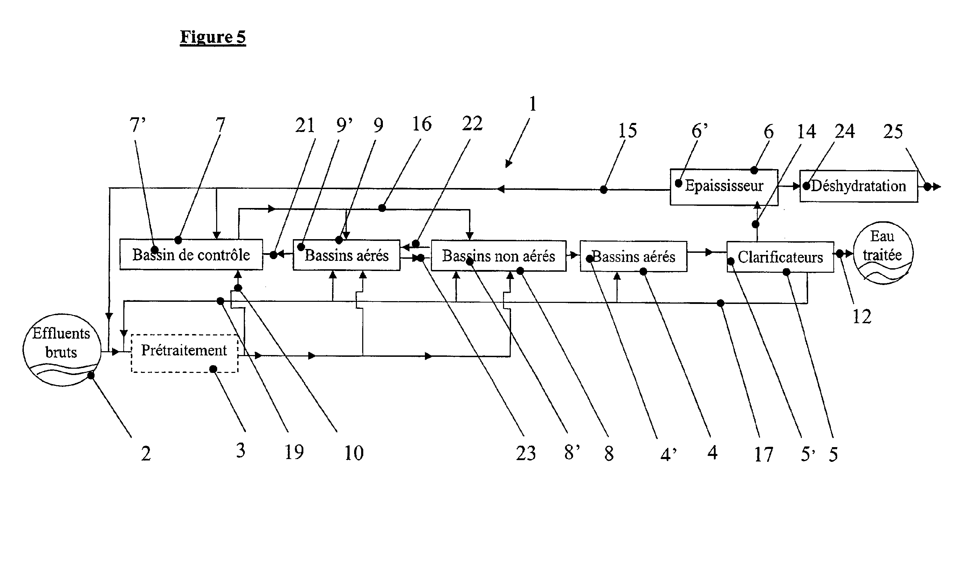

L'étape aérobie de traitement biologique 4 consiste à mettre en contact les effluents à traiter 2 avec une biomasse en présence d'oxygène (oxygène de l'air ou/et oxygène pur) pour l'oxydation de la pollution carbonée et azotée. Il est aussi possible, dans une telle étape 4, de traiter le phosphore par assimilation biologique. Les bassins de traitement biologique aérobie 4' (et/ou 9' figures 3 et 5) sont aérés en continu ou séquentiellement. Cette étape génère un mélange boueux qui est composé de boues très organiques et d'eau. Les boues prélevées depuis ces bassins de traitement biologique aérés 4' (et/ou 9' voir figures 3 et 5) ont un potentiel d'oxydo-réduction positif alors que des boues prélevées depuis des bassins de traitement biologique non aérés 8', tels que ceux représentés aux figures 2 à 5, ont un potentiel d'oxydo-réduction plus faible voire négatif.

L'étape de clarification 5 sert à séparer l'eau des matières solides (particules de boue) en suspension dans les mélanges boueux générés par les bassins aérés 4' (et/ou 9' voir figures 3 et 5) de traitement biologique (et/ou non aérés 8' figures 2 à 5). Les boues prélevées depuis les clarificateurs 5' ont un potentiel d'oxydo-réduction légèrement positif.

L'étape d'épaississement 6 assure la concentration en boues des mélanges boueux obtenus après clarification 5. Les boues prélevées depuis l'épaississeur 6' ont un potentiel d'oxydo-réduction négatif voire très négatif.

L'étape de contrôle 7 consiste à soumettre à un contrôle de la croissance bactérienne, les effluents bruts 2 à traiter et les mélanges boueux provenant des étapes de traitements biologiques 4 (8 ou 9 figures 2 à 5) et de l'étape d'épaississement 6 des boues, pour limiter ou empêcher le développement de la biomasse. Le contrôle de la croissance bactérienne dans le bassin de contrôle 7' peut être continu ou déclenché par cycles en fonction, par exemple, d'une quantité minimale de boues emmagasinée dans le bassin de contrôle 7'. Lors du contrôle de la croissance bactérienne, le potentiel d'oxydo-réduction du mélange contenu dans le bassin de contrôle 7', qui peut varier en fonction de l'alimentation en effluents boueux et/ou en effluents bruts 2, est évalué précisément et continuellement par des mesures qui sont réalisées à partir d'une électrode de mesure en platine (ou en or) et une électrode de référence Ag/AgCl (ou Hg/HgCl$_2$) plongées directement dans le bassin de contrôle 7' ou placée dans une conduite de dérivation. Les mesures sont ensuite corrigées pour obtenir la valeur du potentiel d'oxydo-réduction du mélange boueux contenu dans le bassin de contrôle 7' par rapport à l'électrode normale à hydrogène (EHN) selon la formule : E Ag/AgCl / EHN = E Ag/AgCl + E$_o$ Ag/AgCl / EHN. Dans cette formule :

- E$_o$ Ag/AgCl / EHN est la valeur du potentiel d'oxydo-réduction préalablement déterminée par rapport à celui de l'électrode normale à hydrogène,
- E Ag/AgCl est la valeur du potentiel d'oxydo-réduction du mélange boueux directement mesurée dans le bassin de contrôle 7' et déterminée à l'aide de l'électrode de mesure en platine et de électrode de référence Ag/AgCl,
- E Ag/AgCl / EHN est la valeur du potentiel d'oxydo-réduction du mélange boueux contenu dans le bassin de contrôle 7' déterminée par rapport à l'électrode normale à hydrogène.

En fonction des résultats donnés par les mesures des valeurs du potentiel d'oxydo-réduction, le potentiel d'oxydo-réduction du mélange boueux contenu dans le bassin de contrôle 7' est régulé pour obtenir un équilibre biologique à la limite entre milieu réducteur et oxydant. Ce sont des alternances rapides et fréquentes du potentiel entre milieu oxydant et milieu réducteur qui permettent alors de conserver une valeur du potentiel d'oxydo-réduction du mélange boueux proche de la valeur d'équilibre du potentiel d'oxydo-réduction (valeur du potentiel d'oxydo-réduction proche de 0 volt) qui correspond à la limite entre milieu oxydant et milieu réducteur. La valeur du potentiel d'oxydo-réduction du mélange boueux évolue dans un intervalle fermé autour de la valeur d'équilibre. La valeur inférieure de cet intervalle est négative et la valeur supérieure est positive. Lorsque la valeur du potentiel mesuré dans le mélange boueux est proche de la valeur inférieure ou supérieure de l'intervalle, le potentiel est régulé pour que sa valeur se rapproche de la valeur d'équilibre. Typiquement, l'intervalle est délimité par une valeur inférieure égale à environ -20 mV (millivolt) par rapport à l'électrode normale à hydrogène et une valeur supérieure égale à environ +20mV par rapport à l'électrode normale à hydrogène.

Cette régulation du potentiel d'oxydo-réduction autour et proche de la valeur d'équilibre entre milieu oxydant et milieu réducteur est effectuée pour obtenir dans le bassin de contrôle 7' des réactions d'oxydo-réduction qui mettent en jeu l'ensemble des composés oxydants et des composés réducteurs. Ceci permet de préserver un déséquilibre physiologique de la biomasse conduisant à des pertes énergétiques importantes (adénosine triphosphate / adénosine diphosphate) et de provoquer la dégradation des composés intracellulaires efficacement. De cette manière et bien que le bassin de contrôle 7' soit toujours alimenté en mélange boueux comprenant des bactéries et provenant des bassins de traitement biologiques 4' (8' et/ou 9' figures 2 à 5), le développement et la croissance bactérienne dans le bassin de contrôle 7' sont limités voire bloqués et le développement de la biomasse dans le bassin de contrôle 7' est également limité voire bloqué. Il est aussi possible de diminuer la quantité de biomasse dans ce bassin 7', par conséquent, de limiter ou d'empêcher la production de boues biologiques par le procédé de traitement selon l'invention.

Dans ce mode de mise en oeuvre, la régulation du potentiel d'oxydo-réduction du mélange boueux dans le bassin de contrôle 7' et les alternances rapides et fréquentes de ce potentiel autour de la valeur d'équilibre, sont réalisés par le contrôle de la quantité des effluents bruts 2 alimentant le bassin de contrôle 7' de la croissance bactérienne, les effluents bruts 2 permettant de diminuer le potentiel d'oxydo-réduction. Ce contrôle de la quantité des effluents bruts 2 alimentant le bassin 7' peut être obtenu par une variation du débit d'alimentation 10 ou par une alimentation 10 discontinue des effluents bruts 2 entrant dans le bassin de contrôle 7'.

La régulation du potentiel d'oxydo-réduction est également réalisée par le contrôle du recyclage 16 de la liqueur du bassin de contrôle 7' vers les bassins de traitement biologique 4' qui sont alors alimentés en continu ou séquentiellement. Le recyclage 16 de la liqueur du bassin de contrôle 7' vers les bassins de traitement biologique 4' coopérant avec le recyclage 21 des fluides prélevés depuis ces bassins de traitement biologique 4' vers le bassin de contrôle 7' permet d'augmenter le potentiel d'oxydo-réduction dans le bassin de contrôle 7'.

Lors d'un fonctionnement général d'une station d'épuration 1 selon le mode de mise en oeuvre du procédé représenté en figure 1, les effluents bruts 2 subissent dans un premier temps, et lorsque cela est requis, l'étape de prétraitement 3. Les effluents bruts prétraités sont ensuite dirigés vers les bassins aérés 4' et vers le bassin de contrôle 7' de la croissance bactérienne. Après avoir subi un traitement biologique d'oxydation dans les bassins aérés 4', les mélanges boueux sont envoyés vers les clarificateurs 5'. Après avoir été clarifiées, les eaux épurées sont évacuées (circulation 12) de la station 1 et les boues résiduaires des clarificateurs 5' sont évacuées (circulation 14) vers l'épaississeur 6' où elles sont concentrées. Les boues concentrées sont ensuite recyclées (circulation 15) vers le bassin de contrôle 7' où elles subissent, avec une partie des effluents bruts 2 prétraités ou non prétraités et une partie des boues provenant du traitement biologique 4 un contrôle de la croissance bactérienne. Le contrôle du potentiel d'oxydo-réduction permet de dégrader la matière organique constituant les boues. La liqueur du bassin de contrôle 7' ainsi obtenue, qui est recyclée (circulation 16) vers les bassins aérés 4, contient principalement des composés biodégradables, tel que du carbone et de l'azote, qui sont éliminés et transformés par oxydation et nitrification dans les bassins aérés 4.

Les faibles quantités de boues, qui ne peuvent pas être éliminées par le procédé, subissent, après l'étape d'épaississement 6, une étape de déshydratation 24 avant d'être évacuées (évacuation 25) et traitées par des procédés (non représentés sur les figures) de recyclage classiques.

L'augmentation des débits de recyclage 21 des boues depuis le traitement biologique vers le bassin de contrôle 7' et l'augmentation des débits de recyclages 16 du bassin du contrôle 7' vers les bassins de traitement biologiques permettent d'augmenter la charge de traitement (quantité de boues par unité de temps soumise à l'étape de contrôle 7) de l'étape de contrôle 7 pour améliorer la capacité de traitement en effluents bruts par le procédé selon l'invention représenté en figure 1 tout en préservant des dispositifs, par exemple, pour l'épaississement 6 de faibles capacités. Lorsque le contrôle de la croissance bactérienne 7 est interrompu ou lorsque les débits des effluents bruts 2 à traiter et des mélanges boueux devant subir l'étape de contrôle 7 sont faibles, le recyclage 16 et le recyclage 21 sont interrompus et les fluides circulent, entre le bassin de contrôle 7' et les bassins de traitement biologique 4', uniquement du bassin de contrôle 7' vers les bassins de traitement biologique 4' (circulation référencée 20).

Pour garantir un traitement biologique efficace, la concentration des boues dans les bassins de traitements biologiques 4'( 8' et/ou 9' figures 1 à 5) doit être maintenue à une valeur optimale. Les mélanges boueux résiduaires des clarificateurs 5' peuvent, par conséquent, être recyclés (circulation 17), selon un débit contrôlé ou par une alimentation séquencée, vers au moins l'un des bassins de traitement biologique 4' (et/ou vers au moins l'un des bassins 8' et/ou 9', voir figures 2 à 5) pour contrôler la concentration en boues dans ce ou ces bassins. La quantité de boues recyclée (circulation 17) vers les bassins de traitement biologique 4', 8' et 9' est, par exemple, augmentée pour ajuster la concentration en boues lorsque celle-ci est trop faible.

Les mélanges boueux peuvent également être recyclés (circulation 19) depuis les clarificateurs 5' directement vers le bassin de contrôle 7' pour alimenter (alimentation 19) celui-ci en boues fraîches. Ces boues en partie décantées ont un potentiel d'oxydo-réduction positif ce qui permet d'augmenter l'activité biologique du mélange boueux dans le bassin de contrôle 7'. Le bassin de contrôle 7' est alors alimenté (alimentation 10) par les effluents bruts 2 prétraités sortant de l'étape de prétraitement 3 ou non prétraités et venant directement de la fosse de relèvement des effluents bruts 2 et par les mélanges boueux provenant soit :

- uniquement des bassins de traitement biologiques 4'( 8' et/ou 9' figures 1 à 5) et des clarificateurs 5',
- uniquement des clarificateurs 5' si les boues décantées dans les clarificateurs 5' sont toutes recyclées 19 directement dans le bassin de contrôle 7',
- de l'épaississeur 6', des bassins de traitement biologiques 4'( 8' et/ou 9' figures 1 à 5) et des clarificateurs 5' lorsque les boues résiduaires emmagasinées dans les clarificateurs 5' ne sont que partiellement recyclées vers le bassin de contrôle 7'.

Dans une variante de mise en oeuvre représentée en figure 2, une étape 8 de traitement biologique en l'absence d'oxygène mise en oeuvre dans des bassins non aérés (référencés 8'), a été ajoutée pour la déphosphatation et la dénitrification des effluents (élimination des nitrites, des nitrates et partiellement du phosphore), la déphosphatation étant obtenue par un traitement biologique anaérobie et la dénitrification étant alors obtenue par un traitement biologique anoxique. Cette étape 8 de traitements biologiques anaérobie et anoxique est mise en oeuvre entre l'étape de contrôle 7 et l'étape aérobie 4 de traitement biologique. Les effluents bruts 2, qui ont éventuellement subi l'étape de prétraitement 3, alimentent (alimentation 10) le bassin de contrôle 7' et alimentent, en fonction des concentrations en azote à dénitrifier et en phosphore à traiter présents dans les effluents bruts, les bassins non aérés 8' et/ou aérés 4'. Par exemple, dans le cas d'une forte concentration en azote à dénitrifier et en phosphore à traiter, les effluents bruts 2 alimentent uniquement les bassins non aérés 8', les bassins aérés 4' étant alors alimentés (circulation 23) par les effluents ayant déjà subi l'étape de traitement biologique anaérobie et anoxique 8. Les mélanges boueux soumis au contrôle de la croissance bactérienne 7 proviennent de l'étape de traitement biologique anaérobie et anoxique 8 (circulation 21), de l'étape de clarification 5 (circulation 19) et/ou de l'étape d'épaississement 6 (circulation 15). L'étape de contrôle 7 permettant également d'éliminer les nitrates contenus dans les mélanges boueux génère une liqueur, riche en composés biodégradables et ne contenant pas de nitrates. Selon la circulation 16 cette liqueur est renvoyée, en fonction des concentrations en azote et en phosphore à traiter présents dans la liqueur du bassin de contrôle 7', vers les bassins aérés 4' et/ou vers les bassins non aérés 8' de traitement biologique. Par exemple, si les concentrations en phosphore sont élevées, la liqueur du bassin de contrôle 7' est renvoyée uniquement vers les bassins non aérés 8'. A l'inverse, si les concentrations en phosphore sont très faibles, la liqueur est renvoyée uniquement vers les bassins aérés 4'. Les composés biodégradables, tels que du carbone et de l'azote, sont alors éliminés et transformés par oxydation et nitrification dans ces bassins aérés 4' et/ou par dénitrification et déphosphatation dans les bassins non aérés 8'.

L'augmentation des débits de recyclages 22, 21 des bassins aérés 4' vers les bassins non aérés 8' puis des bassins non aérés 8' vers le bassin de contrôle 7' et l'augmentation des débits de recyclage 16 du bassin de contrôle 7' vers les bassins de traitements biologiques 4', 8' permettent d'accroître la charge de traitement de l'étape de contrôle 7 (quantité de boues par unité de temps soumise à l'étape de contrôle 7) pour améliorer la capacité de traitement en effluents bruts 2 du procédé 1 selon l'invention représenté en figure 2. Le recyclage 22 des bassins aérés 4' vers les bassins non aérés 8' est également nécessaire pour permettre de dénitrifier dans les bassins non aérés 8' l'azote contenu dans les effluents qui a été nitrifié lors de l'étape de traitement biologique aérobie 4. La circulation des bassins non aérés 8' vers les bassins aérés 4' est nécessaire pour traiter dans les bassins aérés 4', non seulement les pollutions carbonées et azotées qui n'ont pas été oxydées, mais encore le phosphore par assimilation biologique, lorsque celui-ci est en concentration élevée dans les effluents bruts 2 et lorsque les concentrations en nitrates sont faibles.

Les mélanges boueux générés par les clarificateurs 5' peuvent être recyclés (circulation 14) vers l'épaississeur 6' où les boues seront concentrées, vers le bassin de contrôle 7' pour alimenter (circulation 19) celui-ci avec des boues dont l'activité biologique est importante et dont le potentiel d'oxydo-réduction est positif, vers les bassins aérés 4' et/ou les bassins non aérés 8' pour maintenir la concentration des matières en suspension (particules de boue en suspension) constante.

Dans une autre variante de mise en oeuvre du procédé représenté en figure 2, les effluents bruts 2, qui ont éventuellement subi l'étape de prétraitement 3, alimentent uniquement le bassin de contrôle 7'. Dans ce cas, les bassins non aérés 8' et aérés 4' sont alors alimentés (circulation 16) uniquement par la liqueur sortant du bassin de contrôle 7'.

La figure 3 est une variante de mise en oeuvre du procédé représenté en figure 2. Une étape supplémentaire de traitement biologique en aérobie 9 est mise en oeuvre dans des bassins aérés (référencés 9') entre l'étape de contrôle 7 et l'étape de traitement biologique anaérobie et anoxique 8 de traitement biologique. Les effluents bruts 2, éventuellement issus de l'étape de prétraitement 3, alimentent le bassin de contrôle 7' et les bassins non aérés 8' et/ou les bassins aérés 9' de l'étape supplémentaire 9. Les bassins non aérés 8' sont alimentés par les effluents bruts lorsque les concentrations en nitrates sont élevées. Les bassins aérés 9' de l'étape supplémentaire 9 sont alimentés par les effluents bruts 2 lorsque les concentrations en nitrates et les concentrations en orthophosphates sont faibles. Les mélanges soumis au contrôle de croissance bactérienne 7 proviennent de l'étape supplémentaire 9 de traitement biologique aérobie et/ou de l'étape de clarification 5 et/ou d'épaississement 6. Dans la circulation 16, la liqueur générée par l'étape de contrôle 7 est renvoyée vers les bassins aérés 9' de l'étape supplémentaire 9, et/ou les bassins non aérés 8' en fonction des concentrations en nitrates et en phosphore.

L'augmentation des débits de recyclages 22, 21 des bassins non aérés 8' vers les bassins aérés 9' puis des bassins aérés 9' vers le bassin de contrôle 7' et des débits de recyclage 16 du bassin de contrôle 7' vers les bassins de traitements biologiques 8', 9' permettent de réguler le potentiel d'oxydo-réduction dans le bassin de contrôle 7' mais aussi d'augmenter la charge de traitement au sein de l'étape de contrôle 7 pour accroître la capacité de traitement en effluents bruts 2 du procédé selon l'invention représenté en figure 3. Les fluides circulent uniquement du bassin de contrôle 7' vers les bassins de traitements biologiques 9', 8' et des bassins aérés 9' vers les bassins non aérés 8', lorsque le contrôle 7 de la croissance bactérienne est interrompu ou lorsque les débits des effluents bruts 2 à traiter et des mélanges boueux 15 devant subir l'étape de contrôle 7 sont faibles.

Dans une variante de mise en oeuvre des procédés précités selon l'invention, la régulation du potentiel d'oxydo-réduction est réalisée par une aération séquencée à l'air ou à l'oxygène pur du bassin de contrôle 7'.

Dans une autre variante, la régulation du potentiel d'oxydo-réduction est réalisée par un contrôle de la quantité de mélange boueux recyclée dans le bassin de contrôle 7' depuis les bassins aérés 4' ou 9', les bassins non aérés 8', les clarificateurs 5' et/ou l'épaississeur 6'. L'alimentation des mélanges boueux dans le bassin de contrôle 7' peut alors être contrôlée, par exemple, par une variation des débits d'alimentation 15, 19, 21.

Selon un perfectionnement de l'invention, les valeurs du potentiel d'oxydo-réduction sont mesurées par un capteur qui transmet les données correspondant aux valeurs du potentiel à un automate. L'automate effectue une analyse et compare les valeurs relevées par rapport aux seuils définis du potentiel d'oxydo-réduction. En fonction des résultats de l'analyse et pour réguler le potentiel d'oxydo-réduction, l'automate pilote l'alimentation 10 des effluents bruts ou des mélanges boueux recyclés 16, 19, 22 vers le bassin de contrôle 7', ou pilote l'aération séquencée du bassin de contrôle 7'.

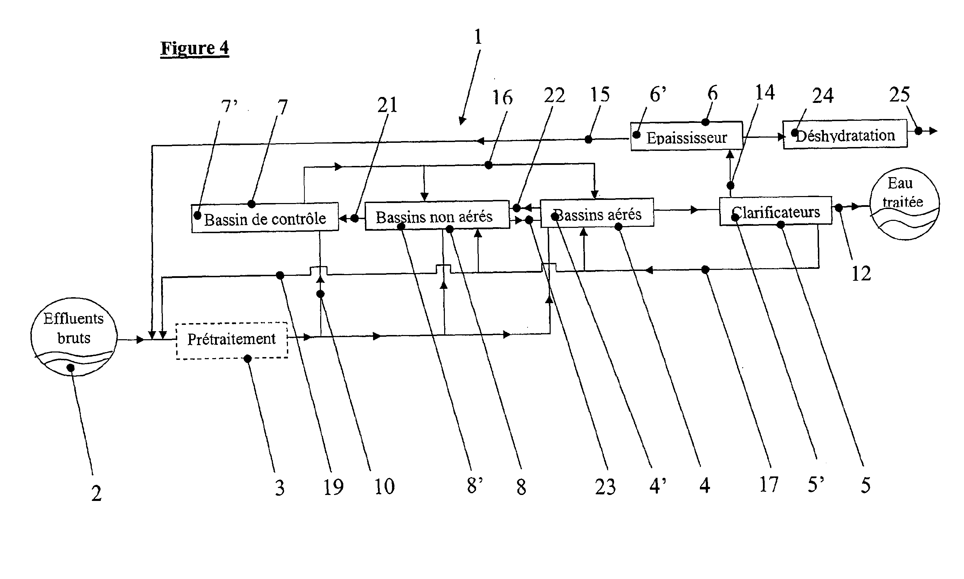

Les figures 4 et 5 représentent respectivement une variante de mise en oeuvre des procédés représentés aux figures 2 et 3. Dans cette variante les mélanges boueux provenant de l'épaississeur 6' et/ou des clarificateurs 5' sont amenés en amont du prétraitement 3, lorsque celui-ci est requis, et en amont du bassin de contrôle 7' directement dans les effluents bruts 2 stockés dans la fosse de relèvement (non représentée) des eaux polluées de la station d'épuration 1 ou lors de l'écoulement des effluents bruts 2 depuis cette fosse vers l'étape de prétraitement 3 ou vers l'étape de contrôle 7.

Dans une autre variante de mise en oeuvre du procédé selon l'invention, les clarificateurs 5' sont remplacés par un dispositif de filtration membranaire. C'est alors le retentat de cette filtration qui est recyclé vers l'épaississeur 6', les bassins de traitement biologiques aérés 4', 9' et/ou non aérés 8', le bassin de contrôle 7' et/ou directement dans les effluents bruts 2 en amont de l'étape de contrôle 7.

Pour des installations existantes de traitement des effluents, l'étape de contrôle 7 est mise en oeuvre dans le ou les bassins tampons de l'installation 1 qui sont placés, par exemple, juste en aval de la fosse de relèvement des eaux brutes 2 ou juste en aval du prétraitement 3 lorsque ceux-ci sont requis.

Dans une variante de mise en oeuvre de l'installation 1 et pour améliorer le traitement, l'étape de contrôle 7 peut comporter une addition de réactifs tel que par exemple de la soude, un oxydant ou un acide. La quantité de réactif utilisée est généralement moins importante que dans l'art antérieur car il ne s'agit que d'un traitement complémentaire à celui du contrôle 7 de la croissance bactérienne. L'étape de contrôle 7 peut également comporter une injection de vapeur et/ou un équipement pour augmenter la température du milieu et/ou un équipement permettant le cisaillement mécanique du mélange boueux tel que, par exemple, une turbine à grande vitesse, un hydro-éjecteur ou moyens similaires.

Dans une variante de mise en oeuvre du procédé selon l'invention, le potentiel d'oxydo-réduction du mélange boueux dans le bassin de contrôle 7' est régulé autour d'une valeur de potentiel qui est différente de la valeur d'équilibre du potentiel précitée (valeur de potentiel proche de 0 V) correspondant à la limite entre le milieu oxydant et réducteur. Le potentiel d'oxydo-réduction du mélange boueux est alors régulé autour d'une valeur de potentiel qui est prédéterminée et comprise par exemple entre - 150 mV et + 150 mV environ par rapport à l'électrode normale à hydrogène. Ce sont également les mesures du potentiel d'oxydo-réduction et des alternances rapides et fréquentes du potentiel d'oxydo-réduction du mélange boueux autour de cette valeur de potentiel prédéterminée qui permettent de préserver un potentiel d'oxydo-réduction du mélange boueux proche de la valeur de potentiel prédéterminée qui est soit négative ou positive pour correspondre à un milieu réducteur ou oxydant du mélange boueux. Typiquement la régulation est telle que la valeur du potentiel d'oxydo-réduction du mélange boueux évolue dans un intervalle prédéterminé qui est d'environ plus ou moins 20 mV par rapport à la valeur de potentiel prédéterminée, l'écart de 20 mV est fonction de l'électrode normale à hydrogène. Par exemple, si la valeur de potentiel prédéterminée est égale à 110 mV, le potentiel d'oxydo-réduction du mélange boueux sera régulé entre 90 mV et 130 mV environ.

Lorsque qu'il est nécessaire de traiter des boues stabilisées dont la charge polluante est faible, l'équilibre biologique est obtenu, comme précité, pour un potentiel d'oxydo-réduction du mélange boueux contenu dans le bassin de contrôle 7' qui est régulé autour d'une valeur de potentiel d'oxydo-réduction prédéterminée. Comme décrit précédemment, cette valeur de potentiel prédéterminée est de préférence égale à la valeur d'équilibre du potentiel d'oxydo-réduction (potentiel égal à environ OV) mais la valeur de potentiel prédéterminée peut également être une valeur négative (comprise entre environ - 150 mV et 0 mV en fonction de l'électrode normale à hydrogène) ou une valeur positive (comprise entre environ 0 mV et + 150 mV en fonction de l'électrode normale à hydrogène) du potentiel d'oxydo-réduction.

Lorsque les boues devant être traitées sont des boues non stabilisées dont la charge polluante est moyenne ou forte, l'équilibre biologique peut également être obtenu pour un potentiel d'oxydo-réduction du mélange boueux contenu dans le bassin de contrôle 7' qui est régulé autour d'une valeur de potentiel d'oxydo-réduction prédéterminée.

Dans une autre variante de mise en oeuvre du procédé selon l'invention et pour des boues non stabilisées dont la charge polluante est moyenne ou forte, le potentiel d'oxydo-réduction du mélange boueux contenu dans le bassin de contrôle 7' est régulé, lors du contrôle de la croissance bactérienne, tantôt autour d'une valeur de potentiel d'oxydo-réduction prédéterminée négative (comprise entre environ - 150 mV et 0 mV en fonction de l'électrode normale à hydrogène) et tantôt autour d'une valeur de potentiel d'oxydo-réduction prédéterminée positive (comprise entre environ 0 mV et + 150 mV en fonction de l'électrode normale à hydrogène). Le potentiel d'oxydo-réduction du mélange boueux dans le bassin de contrôle est alors régulé successivement autour de chacune des deux valeurs de potentiel prédéterminées pour être maintenu dans un intervalle égal à environ plus ou moins 50 mV par rapport à chaque valeur prédéterminée, l'écart de 50 mV est exprimé en fonction l'électrode normale à hydrogène.

Par exemple et pour des boues non stabilisées dont la charge polluante est moyenne ou forte, une valeur de potentiel peut être prédéterminée à environ - 120 mV et une autre à +120 mV en fonction de l'électrode normale à hydrogène. Lors du contrôle de la croissance bactérienne, le potentiel d'oxydo-réduction des mélanges boueux dans le bassin de contrôle 7' sera régulé successivement et durant des périodes de temps d'une durée déterminée, pouvant être par exemple égale à environ dix minutes, tantôt autour de la valeur de potentiel prédéterminée et égale à environ - 120 mV et tantôt autour de la valeur de potentiel prédéterminée et égale à environ + 120 mV. Lorsque le potentiel d'oxydo-réduction des mélanges boueux est régulé pour être maintenu dans un intervalle égal à environ plus ou moins 50 mV qui est centré autour de chaque valeur de potentiel prédéterminée, le potentiel d'oxydo-réduction des mélanges boueux sera régulé tantôt entre -70 mV et - 170 mV et tantôt entre + 70 mV et + 170 mV.

Les différents modes de mise en oeuvre représentés aux figures 1 à 5 sont choisis en fonction des caractéristiques de la pollution, telles que par exemple : pH, température, TAC (titre alcalimétrique complet), DCO (demande chimique en oxygène), $DBO_5$ (demande biochimique en oxygène), MeS (matières en suspension), MV (matières volatiles), SEH (substances extractibles à l'hexane), N/NTK, $N/NO_2^-$, $N/NO_3^-$, Ptotal (concentration en phosphate), Portho (concentration en orthophoshate), $H_2S/HS^-$, $SO_2$, $SO_4^{2-}$,

Par exemple, dans le mode de mise en oeuvre du procédé selon l'invention représenté en figure 1, les pollutions pouvant être traitées comprennent :

- de la DCO, de la $DBO_5$ des MeS, des MV,

- des faibles concentrations en SEH, en $H_2S/HS^-$, en $N/NO_2^-$, en $N/NO_3^-$ et en $SO_2$,

- des concentrations en N/NTK et une concentration du Ptotal en équilibres par rapport aux besoins de synthèse de la biomasse.

Par exemple, dans les modes de mise en oeuvre du procédé selon l'invention représenté en figures 2 et 4, les pollutions pouvant être traitées comprennent :

- de la DCO, de la $DBO_5$, des MeS, des MV,

- des faibles concentrations en SEH, en $H_2S/HS^-$, en $SO_2$,

- des concentrations en $N/NO_2^-$, $N/NO_3^-$, N/NTK élevées,

- et une concentration du Ptotal en équilibre par rapport aux besoins de synthèse de la biomasse.

Par exemple, dans les modes de mise en oeuvre du procédé selon l'invention représentés en figures 3 et 5, les pollutions pouvant être traitées comprennent :

- de la DCO, de la $DBO_5$, des MeS, des MV,

- des faibles concentrations en SEH, en $H_2S/HS^-$,

- des concentrations en $N/NO_2^-$, $N/NO_3^-$, N/NTK élevées,

- et une concentration du Ptotal élevée par rapport aux besoins de synthèse de la biomasse.

Pour les modes de mise en oeuvre représentés en figures 1 à 5, lorsque les concentrations en SEH sont élevées un prétraitement peut être mis en oeuvre et lorsque les concentrations en $SO_2$ sont élevées un prétraitement par oxydation peut être mis en oeuvre.

Le tableau suivant permet de comparer les résultats obtenus lors d'essais pilotes par un procédé classique de traitement (sans l'étape de contrôle de la croissance bactérienne) et un procédé mis en oeuvre selon l'invention pour des installations fonctionnant à faible charge massique et pour différents types d'effluents bruts à traiter. Chaque résultat donne la masse de boues biologiques (MeS : matière en suspension) produite par une installation de traitement sur une période déterminée, en fonction de la masse $DBO_5$ éliminée (demande biochimique en oxygène) durant cette même période déterminée. Ces résultats permettent d'évaluer l'efficacité de chaque procédé en fonction de la masse de $DBO_5$ éliminée.

| | Effluents de laiterie | Effluents d'abattoir | Siccité après désydratation par centrifugeuse |
| --- | --- | --- | --- |
| Procédé classique en faible charge | Environ 0,45 kg MeS / kg $DBO_5$ éliminée | Environ 0,55 kg MeS / kg $DBO_5$ éliminée | 12 à 20 % |
| Procédé selon l'invention en faible charge | 0,1 à 0,2 kg MeS / kg $DBO_5$ éliminée | 0,15 à 0,3 kg MeS / kg $DBO_5$ éliminée | 15 à 25 % |
| Procédé selon l'invention en faible charge et utilisant des membranes | 0,03 à 0,15 kg MeS / kg $DBO_5$ éliminée | 0,05 à 0,15 kg MeS / kg $DBO_5$ éliminée | 14 à 25 % |

Les résultats, obtenus selon une démarche opératoire décrite ci-après, montrent que le procédé mis en oeuvre selon l'invention est bien plus efficace qu'un procédé classique puisque, selon les différents cas envisagés, le procédé de l'invention permet de réduire de 30 à plus de 90 % la production de boues par rapport à un procédé classique. Une conséquence immédiate est de pouvoir diminuer la capacité de l'atelier de déshydratation 24 d'au moins 40 % en préservant les quantités d'effluents bruts à traiter 2. Du fait d'une plus forte minéralité des boues pouvant être produites selon un procédé de l'invention, la déshydratation de celles-ci est nettement améliorée : augmentation de 2 à 5 points de siccité (voir tableau ci-dessus).

Le mode opératoire pour obtenir les résultats précités à partir de chacune des deux installations de traitement, l'une fonctionnant suivant un procédé classique et l'autre suivant un procédé mis en oeuvre selon l'invention, a consisté dans un premier temps à réaliser des bilans de production de boues quotidiens sur plusieurs jours à partir d'échantillons moyens prélevés sur 24 heures. Ces échantillons ont été prélevés :

- sur les effluents bruts 2 pour comptabiliser les matières en suspension qui pénètrent dans l'installation de traitement 1,
- sur l'eau traitée 12 pour comptabiliser les matières en suspension qui sortent de l'installation,
- sur les extractions de boues réalisées régulièrement à partir des bassins de boues, tel que notamment les bassins aérés 4', 9' et les bassins non aérés 8' de traitement biologique, afin de maintenir une concentration de boues constante et idéale dans ces bassins,
- et sur la liqueur mixte des différents bassins aérés 4', 9' ou non aérés 8' pour vérifier les concentrations de boues.

La masse de boues biologiques générée sur une période déterminée, par exemple sur six mois environ, par une installation de traitement est donnée par la formule suivante :

$$(\text{MeS extraction} * \text{volume extrait}) + (\text{MeS eau traitée}) * (\text{volume traité} - \text{volume extrait}) - (\text{MeS eau brute} * \text{volume traité}) = \text{masse de boues générée}$$

Dans cette formule :

- MeS extraction : correspond à la quantité moyenne de MeS (matières solides en suspension) par unité de volume de mélange boueux extrait à partir des bassins de traitements biologiques 4', 8', 9' contenant les boues, cette concentration est exprimée par exemple en g/l, les MeS d'extraction comprennent des particules de boue principalement organiques (45 à 90% de matière organique),
- volume extrait : correspond au volume total, en litre, de mélanges boueux extraits des bassins de traitements biologiques 4', 8', 9' qui contiennent les boues, et qui, en excès, sont évacués en dehors de l'installation de traitement durant la période déterminée,
- MeS eau traitée : correspond à la quantité moyenne de MeS par unité de volume d'eau traitée 12 (épurée) sortant de l'installation 1, cette concentration est exprimée par exemple en g/l, les MeS eau traitée comprennent des particules de boue non retenues par les clarificateurs 5' et se trouvant en suspension dans l'eau traitée,
- volume traité : correspond au volume total, en litre, d'effluents bruts 2 entrant dans l'installation d'épuration durant la période déterminée,
- volume traité - volume extrait : correspond au volume total, en litre, d'eau traité sortant de l'installation d'épuration durant la période déterminée,
- MeS eau brute : correspond à la quantité moyenne de MeS non biodégradables par unité de volume d'effluents bruts entrant dans l'installation d'épuration, cette concentration est exprimée par exemple en g/l, les MeS eau brute comprennent des particules organiques et/ou minérales en suspension dans les eaux brutes.

L'analyse des matières en suspension (MeS) consiste tout d'abord à effectuer une filtration sur papier filtre (préalablement pesé) d'un volume d'échantillon déterminé puis dans une deuxième étape au séchage à l'étuve à une température d'environ 105°C durant 24 heures du papier filtre. La différence de masse entre le filtre contenant les matières en suspension et le filtre vierge permet de calculer la concentration en g/l en tenant compte du volume déterminé de l'échantillon.

La production de boues est ensuite comparée à la masse, exprimée en g, de la $DBO_5$ éliminée (demande biochimique en oxygène) sur la même période considérée lors de l'évaluation de la masse de boues générée par l'installation. La production de boues est alors exprimée en fonction de la masse de la $DBO_5$ éliminée en g MeS / g $DBO_5$ (ou en kg MeS / kg $DBO_5$). Pour obtenir une précision maximale des résultats, la détermination de la masse de boues générée et de la $DBO_5$ éliminée a été effectuée sur une période de plusieurs mois par exemple six mois environ.

**Revendications**

1. Procédé de traitement biologique d'effluents bruts pollués (2), tels que des eaux résiduaires industrielles et urbaines, comprenant:

• au moins une étape de traitement biologique des effluents bruts pollués (2) conduisant à la production de mélanges boueux, comportant des boues organiques et de l'eau, et
• une étape de contrôle (7) de la croissance bactérienne d'au moins une partie des mélanges boueux et d'au moins une partie des effluents bruts (2) à traiter,

la croissance bactérienne des mélanges boueux étant contrôlée par la mesure et la régulation du potentiel d'oxydo-réduction desdits mélanges boueux contenues dans un bassin (7') de l'étape de contrôle (7), **caractérisé en ce que** le potentiel d'oxydo-réduction des mélanges boueux est régulé par des alternances rapides et fréquentes du potentiel autour d'une valeur prédéterminée et comprise entre -150 mV et +150 mV, par rapport à l'électrode normale à hydrogène, afin de limiter ou d'empêcher la production des boues organiques.

2. Procédé de traitement biologique selon la revendication 1, **caractérisé en ce que** l'étape de contrôle (7) est réalisée dans au moins un bassin de réception (7') de la partie des mélanges boueux et de la partie des effluents bruts (2) à traiter.

3. Procédé de traitement biologique selon la revendication 2, **caractérisé en ce que** le procédé comprend :

• une étape de traitement biologique aérobie (4) des effluents bruts (2) dans au moins un bassin aéré (4'), conduisant à la production d'un mélange boueux,
• une étape de clarification (5) du mélange boueux dans au moins un clarificateur (5'),

les mélanges boueux soumis à l'étape de contrôle (7) de la croissance bactérienne étant prélevés depuis au moins l'une des deux étapes précitées (4, 5) de traitement biologique et de clarification.

4. Procédé de traitement biologique selon la revendication 3, **caractérisé en ce que** le procédé comprend également une étape d'épaississement (6) du mélange boueux dans au moins un épaississeur (6'), les mélanges boueux soumis à l'étape de contrôle (7) de la croissance bactérienne étant prélevés depuis au moins cette étape d'épaississement (6) ou l'une des deux étapes précitées (4, 5) de traitement biologique et de clarification.

5. Procédé de traitement biologique selon la revendication 4, **caractérisé en ce que** le procédé comprend une étape supplémentaire de traitement biologique (8) des effluents bruts (2) dans au moins un bassin non aéré (8'), les mélanges boueux soumis à l'étape de contrôle (7) de la croissance bactérienne étant prélevés depuis au moins cette étape supplémentaire de traitement biologique (8) ou l'une des trois étapes précitées (4, 5, 6) de traitement biologique, de clarification et d'épaississement.

6. Procédé de traitement biologique selon la revendication 5, **caractérisé en ce que** le procédé comprend une deuxième étape de traitement biologique aérobie (9) des effluents bruts (2) dans au moins un bassin aéré (9'), les mélanges boueux soumis à l'étape de contrôle (7) de la croissance bactérienne étant prélevés depuis au moins cette deuxième étape de traitement biologique aérobie (9) ou l'une des quatre étapes précitées (4, 5, 6, 8) de traitements biologiques en bassins aérés et non aérés, de clarification et d'épaississement.

7. Procédé de traitement biologique selon l'une des revendications 3 à 6, **caractérisé en ce que** l'étape de clarification (5) est remplacée par une étape de filtration membranaire, les mélanges boueux soumis à l'étape de contrôle (7) de la croissance bactérienne pouvant être prélevés depuis cette étape de filtration.

8. Procédé de traitement biologique selon l'une des revendications 2 à 7, **caractérisé en ce que** les mélanges boueux soumis à l'étape de contrôle (7) de la croissance bactérienne sont introduits directement dans le bassin (7') de l'étape de contrôle (7) de la croissance bactérienne.

9. Procédé de traitement biologique selon l'une des revendications 2 à 7, **caractérisé en ce que** les mélanges boueux devant être soumis à l'étape de contrôle (7) de la croissance bactérienne sont recyclés en amont du bassin (7') de l'étape de contrôle (7) de la croissance bactérienne dans les effluents bruts (2).

10. Procédé de traitement biologique selon l'une des revendications précédentes, **caractérisé en ce que** le potentiel d'oxydo-réduction des mélanges boueux est régulé autour d'une valeur proche de zéro correspondant à l'équilibre biologique entre milieu oxydant et milieu réducteur.

11. Procédé de traitement biologique selon la revendication 10, **caractérisé en ce que** le potentiel d'oxydo-réduction des mélanges boueux est régulé pour être maintenu entre une valeur négative égale à environ - 50mV et une valeur positive égale à environ + 50mV, par rapport à l'électrode normale à hydrogène.

**12.** Procédé de traitement biologique selon la revendication 10, **caractérisé en ce que** le potentiel d'oxydo-réduction des mélanges boueux est régulé pour être maintenu entre une valeur négative égale à environ - 20mV et une valeur positive égale à environ + 20mV, par rapport à l'électrode normale à hydrogène.

**13.** Procédé de traitement biologique selon l'une des revendications 1 à 9, **caractérisé en ce que** le potentiel d'oxydo-réduction des mélanges boueux est régulé pour être maintenu dans un intervalle qui est d'environ plus ou moins 50 mV, par rapport à la valeur de potentiel prédéterminée.

**14.** Procédé de traitement biologique selon l'une des revendications 1 à 9, **caractérisé en ce que** le potentiel d'oxydo-réduction des mélanges boueux est régulé pour être maintenu dans un intervalle qui est d'environ plus ou moins 20 mV, par rapport à la valeur de potentiel prédéterminée.

**15.** Procédé de traitement biologique selon l'une des revendications 1 à 9, **caractérisé en ce que** le potentiel d'oxydo-réduction des mélanges boueux est régulé pour être régulé tantôt autour d'une valeur de potentiel d'oxydoréduction prédéterminée négative, comprise entre environ - 150 mV et 0 mV, par rapport de l'électrode normale à hydrogène, et tantôt autour d'une valeur de potentiel d'oxydo-réduction prédéterminée positive, comprise entre environ 0 mV et + 150 mV, par rapport à l'électrode normale à hydrogène.

**16.** Procédé de traitement biologique selon la revendication 15, **caractérisé en ce que** le potentiel d'oxydo-réduction des mélanges boueux est régulé successivement autour de chacune des deux valeurs de potentiel prédéterminées pour être maintenu dans un intervalle égal à environ plus ou moins 50 mV par rapport à chaque valeur prédéterminée.

**17.** Procédé de traitement biologique selon l'une des revendications précédentes, **caractérisé en ce qu'**on mesure le potentiel d'oxydo-réduction par des moyens de mesure comportant au moins une électrode de mesure en platine ou en or et une électrode de référence Ag/AgCl ou Hg/HgCl$_2$.

**18.** Procédé de traitement biologique selon la revendication 17, **caractérisé en ce que** les moyens de mesure comprennent un capteur de mesure associé à un automate qui régule le potentiel d'oxydo-réduction.

**19.** Procédé de traitement biologique selon l'une des revendications précédentes, **caractérisé en ce que** le potentiel d'oxydo-réduction du mélange boueux est mesuré et régulé en continu ou déclenché par cycles.

**20.** Procédé de traitement biologique selon l'une des revendications précédentes, **caractérisé en ce que** la régulation du potentiel d'oxydoréduction est obtenue par un contrôle de l'alimentation en effluents bruts (10) entrant dans le bassin (7') de l'étape de contrôle (7) de la croissance bactérienne.

**21.** Procédé de traitement biologique selon l'une des revendications 1 à 19, **caractérisé en ce que** la régulation du potentiel d'oxydo-réduction est obtenue par une régulation du débit d'alimentation en effluents bruts (10) entrant dans le bassin (7') de l'étape de contrôle (7) de la croissance bactérienne.

**22.** Procédé de traitement biologique selon l'une des revendications 5 à 21, **caractérisé en ce que** la régulation du potentiel d'oxydo-réduction est obtenue par un contrôle de l'évacuation (16) de la liqueur du bassin de contrôle (7') vers au moins un bassin aéré (4', 9') ou au moins un bassin non aéré (8').

**23.** Procédé de traitement biologique selon l'une des revendications 5 à 21, **caractérisé en ce que** la régulation du potentiel d'oxydo-réduction est obtenue par une régulation du débit d'évacuation de la liqueur du bassin de contrôle (7') vers au moins un bassin aéré (4', 9') ou au moins un bassin non aéré (8').

**24.** Procédé de traitement biologique selon l'une des revendications précédentes, **caractérisé en ce que** la régulation du potentiel d'oxydoréduction est obtenue par une aération séquencée à l'air ou à l'oxygène pur du bassin de contrôle (7').

**25.** Procédé de traitement biologique selon l'une des revendications précédentes, **caractérisé en ce que** la régulation du potentiel d'oxydoréduction est obtenue par un contrôle de l'alimentation en mélanges boueux recyclés dans le bassin (7') de l'étape de contrôle (7) depuis au moins un bassin aéré (4', 9') de traitement biologique (4, 9), au moins un bassin non aéré (8') de traitement biologique (8), au moins un clarificateur (5') et/ou au moins un épaississeur (6').

**26.** Procédé de traitement biologique selon l'une des revendications 1 à 24, **caractérisé en ce que** la régulation du potentiel d'oxydo-réduction est obtenue par une régulation du débit d'alimentation en mélanges boueux recyclés dans le bassin (7') de l'étape de contrôle (7) depuis au moins un bassin aéré (4', 9') de traitement biologique (4, 9), au moins un bassin non aéré (8') de traitement biologique (8), au moins un clarificateur (5') et/ou au moins un épaississeur (6').

**27.** Procédé de traitement biologique selon l'une des revendications précédentes, **caractérisé en ce que** l'étape de contrôle (7) comporte une addition de réactifs tels que de la soude, un acide ou un oxydant.

**28.** Procédé de traitement biologique selon l'une des revendications précédentes, **caractérisé en ce que** l'étape de contrôle (7) comporte une injection de vapeur.

**29.** Procédé de traitement biologique selon l'une des revendications précédentes, **caractérisé en ce que** l'étape de contrôle (7) comporte une augmentation de la température du milieu.

**30.** Procédé de traitement biologique selon l'une des revendications précédentes, **caractérisé en ce que** l'étape de contrôle (7) comporte un cisaillement mécanique du mélange boueux, par exemple, par une turbine à grande vitesse ou par un hydro-éjecteur.

**31.** Procédé de traitement biologique selon l'une des revendications précédentes, **caractérisé en ce que** la circulation des mélanges boueux entre au moins deux étapes de traitements biologiques (4, 8, 9) et/ou entre l'étape de contrôle (7) et au moins une étape de traitement biologique (4, 8, 9) peut être effectuée dans un sens ou à l'opposé.

**32.** Procédé de traitement biologique selon l'une des revendications précédentes, **caractérisé en ce que** l'étape de contrôle (7) est mise en oeuvre dans au moins un bassin tampon d'une installation de traitement.

**Claims**

**1.** A method for the biological treatment of untreated polluted effluent (2) such as factory or municipal waste water, comprising:

> • at least one step for biologically treating the polluted untreated effluent (2), resulting in the production of a sludge mixture comprising organic sludge and water; and
> • a step (7) for monitoring and controlling the bacterial growth of at least a portion of the sludge mixture and at least a portion of the untreated effluent (2) to be treated;

the bacterial growth of the sludge mixture being monitored and controlled by measuring and adjusting the redox potential of said sludge mixture contained in a tank (7') of the monitoring and controlling step (7); **characterized in that** the redox potential of the sludge mixture is adjusted by alternating the potential rapidly and frequently about a predetermined value which is in the range -150 mV to 150 mV with respect to the standard hydrogen electrode in order to limit or prevent the production of organic sludge.

**2.** A biological treatment method according to claim 1, **characterized in that** the monitoring and controlling step (7) is carried out in at least one tank (7') for receiving the portion of sludge mixture and the portion of untreated effluent (2) to be treated.

**3.** A biological treatment method according to claim 2, **characterized in that** the method includes:

> • a step (4) for aerobic biological treatment of the untreated effluent (2) in at least one aerated tank (4'), resulting in the production of a sludge mixture;
> • a step (5) for clarification of the sludge mixture in at least one clarifier (5');

the sludge mixture which is subjected to the bacterial growth monitoring and controlling step (7) being removed from at least one of said two steps (4, 5) for biological treatment and for clarification.

**4.** A biological treatment method according to claim 3, **characterized in that** the method also includes a step (6) for densifying the sludge mixture in at least one densifier (6'), the sludge mixture which is subjected to the bacterial growth monitoring and controlling step (7) being removed from at least said densification step (6) or one of the two said steps (4, 5) for biological treatment and for clarification.

**5.** A biological treatment method according to claim 4, **characterized in that** the method includes a supplemental step (8) for biological treatment of the untreated effluent (2) in at least one non-aerated tank (8'), the sludge mixture which is subjected to the bacterial growth monitoring and controlling step (7) being removed from at least said supplemental biological treatment step (8) or one of said three steps (4, 5, 6) for biological treatment, for clarification and for densification.

**6.** A biological treatment method according to claim 5, **characterized in that** the method includes a second step (9) for aerobic biological treatment of the untreated effluent (2) in at least one aerated tank (9'), the sludge mixture which is subjected to a bacterial growth monitoring and controlling step (7) being removed from at least said second aerobic biological treatment step (9) or one of said four steps (4, 5, 6, 8) for biological treatments in aerated and non-aerated basins, for clarification, and for densification.

**7.** A biological treatment method according to one of claims 3 to 6, **characterized in that** the clarification step (5) is replaced by a membrane filtration step, the sludge mixture which is subjected to the bacterial growth monitoring and controlling step (7) possibly being removed from said filtration step.

**8.** A biological treatment method according to one of claims 2 to 7, **characterized in that** the sludge mixture which is subjected to the bacterial growth monitoring and controlling step (7) is introduced directly into the tank (7') of the bacterial growth monitoring and controlling step (7).

**9.** A biological treatment method according to one of claims 2 to 7, **characterized in that** the sludge mixture which has to be subjected to the bacterial growth monitoring and controlling step (7) is recycled upstream of the tank (7') of the bacterial growth monitoring and controlling step (7) in the untreated effluents (2).

**10.** A biological treatment method according to one of the preceding claims, **characterized in that** the redox potential of the sludge mixture is adjusted about a value which is close to zero corresponding to the biological equilibrium between the oxidizing medium and the reducing medium.

**11.** A biological treatment method according to claim 10, **characterized in that** the redox potential of the sludge mixture is adjusted so as to be maintained between a negative value equal to approximately -50 mV and a positive value equal to approximately +50 mV, with respect to the standard hydrogen electrode.

**12.** A biological treatment method according to claim 10, **characterized in that** the redox potential of the sludge mixture is adjusted so as to be maintained between a negative value equal to approximately -20 mV and a positive value equal to approximately +20 mV with respect to the standard hydrogen electrode.

**13.** A biological treatment method according to one of claims 1 to 9, **characterized in that** the redox potential of the sludge mixture is adjusted so as to be maintained within a range which is approximately plus or minus 50 mV with respect to the predetermined value of the potential.

**14.** A biological treatment method according to one of claims 1 to 9, **characterized in that** the redox potential of the sludge mixture is adjusted so as to be maintained within a range which is approximately plus or minus 20 mV with respect to the predetermined value of the potential.

**15.** A biological treatment method according to one of claims 1 to 9, **characterized in that** the redox potential of the sludge mixture is adjusted so as to be adjusted both about a predetermined negative redox potential in the range from approximately -150 mV to 0 mV with respect to the standard hydrogen electrode, and about a predetermined positive redox potential value in the range from approximately 0 mV to +150 mV with respect to the standard hydrogen electrode.

**16.** A biological treatment method according to claim 15, **characterized in that** the redox potential of the sludge mixture is adjusted successively about each of two predetermined values of potential so as to be maintained within a range equal to approximately plus or minus 50 mV with respect to each predetermined value.

17. A biological treatment method according to one of the preceding claims, **characterized in that** the redox potential is measured using measurement means comprising at least one platinum or gold measuring electrode and an Ag/AgCl or Hg/HgCl$_2$ reference electrode.

18. A biological treatment method according to claim 17, **characterized in that** the measurement means comprise a measuring sensor associated with an automated device which adjusts the redox potential.

19. A biological treatment method according to one of the preceding claims, **characterized in that** the redox potential of the sludge mixture is measured and adjusted continuously or triggered in cycles.

20. A biological treatment method according to one of the preceding claims, **characterized in that** the redox potential is adjusted by monitoring and controlling the supply of untreated effluent (10) entering the tank (7') of the bacterial growth monitoring and controlling step (7).

21. A biological treatment method according to one of claims 1 to 19, **characterized in that** the redox potential is adjusted by adjusting the supply rate of untreated effluent (10) entering the tank (7') of the bacterial growth monitoring and controlling step (7).

22. A biological treatment method according to one of claims 5 to 21, **characterized in that** the redox potential is adjusted by monitoring and controlling the evacuation (16) of liquor from the monitoring and controlling tank (7') to at least one aerated tank (4', 9') or at least one non-aerated tank (8').

23. A biological treatment method according to one of claims 5 to 21, **characterized in that** the redox potential is adjusted by adjusting the evacuation flow rate of liquor from the monitoring and controlling tank (7') to at least one aerated tank (4', 9') or at least one non-aerated tank (8').

24. A biological treatment method according to one of the preceding claims, **characterized in that** the redox potential is adjusted by sequenced aeration of the monitoring and controlling tank (7') with air or pure oxygen.

25. A biological treatment method according to one of the preceding claims, **characterized in that** the redox potential is adjusted by monitoring and controlling the supply of sludge mixture recycled to the tank (7') of the monitoring and control step (7) from at least one aerated tank (4', 9') for biological treatment (4, 9), at least one tank (8') for biological treatment (8), at least one clarifier (5') and/or at least one densifier (6').

26. A biological treatment method according to one of claims 1 to 24, **characterized in that** the redox potential is adjusted by regulating the rate of supply of sludge mixture recycled to the tank (7') of the monitoring and controlling step (7) from at least one aerated tank (4', 9') for biological treatment (4, 9), at least one non-aerated tank (8') for biological treatment (8), at least one clarifier (5') and/or at least one densifier (6').

27. A biological treatment method according to one of the preceding claims, **characterized in that** the monitoring and controlling step (7) includes adding reagents such as caustic soda, an acid or an oxidizing agent.

28. A biological treatment method according to one of the preceding claims, **characterized in that** the monitoring and controlling step (7) includes injecting steam.

29. A biological treatment method according to one of the preceding claims, **characterized in that** the monitoring and controlling step (7) includes increasing the temperature of the medium.

30. A biological treatment method according to one of the preceding claims, **characterized in that** the monitoring and controlling step (7) includes mechanically shearing the sludge mixture, for example using a high speed turbine or a hydro-ejector.

31. A biological treatment method according to one of the preceding claims, **characterized in that** movement of the sludge mixture between at least two biological treatment steps (4, 8, 9) and/or between the monitoring and controlling step (7) and at least one biological treatment step (4, 8, 9) may be carried out in one direction or in the opposite direction.

32. A biological treatment method according to one of the preceding claims, **characterized in that** the monitoring and controlling step (7) is carried out in at least one buffer tank of a treatment facility.

**Patentansprüche**

1. Verfahren zur biologischen Behandlung von ungereinigtem verschmutztem Abwasser (2), wie industrielle und städtische Abwässer, welches aufweist:

   - wenigstens einen Schritt der biologischen Behandlung von ungereinigtem verschmutztem Abwasser (2), der zur Herstellung schlammiger Gemische, die organische Schlämme und Wasser umfassen, führt, und
   - wenigstens einen Schritt (7) der Kontrolle des bakteriellen Wachstums von wenigstens einem Teil der schlammigen Gemische und von wenigstens einem Teil des zu behandelnden ungereinigten Abwassers (2),

   wobei das bakterielle Wachstum der schlammigen Gemische durch Messen und Regulierung des Redoxpotentials der schlammigen Gemische, die in einem Becken (7') für den Kontrollschritt (7) enthalten sind, kontrolliert wird, **dadurch gekennzeichnet, dass** das Redoxpotential der schlammigen Gemische durch schnelles und häufiges Alternieren des Potentials um einen Wert reguliert wird, der vorbestimmt ist und zwischen - 150 mV und +150 mV liegt, bezogen auf die Standardwasserstoffelektrode, um die Produktion organischer Schlämme einzuschränken oder zu verhindern.

2. Verfahren zur biologischen Behandlung gemäß Anspruch 1, **dadurch gekennzeichnet, dass** der Kontrollschritt (7) in wenigstens einem Aufnahmebecken (7') für den Teil der schlammigen Gemische und den Teil des zu behandelnden ungereinigten Abwassers (2) durchgeführt wird.

3. Verfahren zur biologischen Behandlung gemäß Anspruch 2, **dadurch gekennzeichnet, dass** das Verfahren aufweist:

   - einen Schritt der aeroben biologischen Behandlung (4) des ungereinigten Abwassers (2) in wenigstens einem belüfteten Becken (4'), was zur Herstellung eines schlammigen Gemischs führt,
   - einen Schritt (5) der Klärung des schlammigen Gemischs in wenigstens einem Klärbecken (5'),

   wobei die dem Schritt (7) der Kontrolle des bakteriellen Wachstums unterzogenen schlammigen Gemische bei wenigstens einem der beiden vorgenannten Schritte (4, 5) der biologischen Behandlung und Klärung entnommen werden.

4. Verfahren zur biologischen Behandlung gemäß Anspruch 3, **dadurch gekennzeichnet, dass** das Verfahren gleichermaßen einen Schritt (6) der Eindickung des schlammigen Gemischs in wenigstens einem Eindickungsbecken (6') aufweist, wobei die dem Schritt (7) der Kontrolle des bakteriellen Wachstums unterzogenen schlammigen Gemische bei wenigstens diesem Eindickungsschritt (6) oder einem der beiden vorgenannten Schritte (4, 5) der biologischen Behandlung und Klärung entnommen werden.

5. Verfahren zur biologischen Behandlung gemäß Anspruch 4, **dadurch gekennzeichnet, dass** das Verfahren einen zusätzlichen Schritt (8) der biologischen Behandlung von ungereinigtem Abwasser (2) in wenigstens einem nicht belüfteten Becken (8') aufweist, wobei die schlammigen Gemische, die dem Schritt (7) der Kontrolle des bakteriellen Wachstums unterzogen werden, bei wenigstens diesem zusätzlichen Schritt (8) der biologischen Behandlung oder einem der drei vorgenannten Schritte (4, 5, 6) der biologischen Behandlung, der Klärung und Eindickung entnommen werden.

6. Verfahren zur biologischen Behandlung gemäß Anspruch 5, **dadurch gekennzeichnet, dass** das Verfahren einen zweiten Schritt (9) der aeroben biologischen Behandlung ungereinigter Abwässer (2) in wenigstens einem belüfteten Becken (9') aufweist, wobei die schlammigen Gemische, die dem Schritt (7) der Kontrolle des bakteriellen Wachstums unterzogen werden, bei wenigstens diesem zweiten Schritt (9) der aeroben biologischen Behandlung oder einem der vier vorgenannten Schritte (4, 5, 6, 8) der biologischen Behandlung in belüfteten und nicht belüfteten Becken, Klärung und Eindickung entnommen werden.

7. Verfahren zur biologischen Behandlung gemäß einem der Ansprüche 3 bis 6, **dadurch gekennzeichnet, dass** der Klärungsschritt (5) durch einen Schritt des Membranfilterns ersetzt wird, wobei die schlammigen Gemische, die dem Schritt (7) der Kontrolle des bakteriellen Wachstums unterzogen werden, bei diesem Schritt des Filterns entnommen werden können.

8. Verfahren zur biologischen Behandlung gemäß einem der Ansprüche 2 bis 7, **dadurch gekennzeichnet, dass** die schlammigen Gemische, die dem Schritt (7) der Kontrolle des bakteriellen Wachstums unterzogen werden, direkt in das Becken (7') für den Schritt (7) der Kontrolle des bakteriellen Wachstums eingebracht werden.

9. Verfahren zur biologischen Behandlung gemäß einem der Ansprüche 2 bis 7, **dadurch gekennzeichnet, dass** die schlammigen Gemische, bevor sie dem Schritt (7) der Kontrolle des bakteriellen Wachstums unterzogen werden, oberhalb des Beckens (7') für den Schritt (7) der Kontrolle des bakteriellen Wachstums erneut in den Kreislauf in das ungereinigte Abwasser (2) eingebracht werden.

10. Verfahren zur biologischen Behandlung gemäß einem der vorausgegangenen Ansprüche, **dadurch gekennzeichnet, dass** das Redoxpotential der schlammigen Gemische um einen Wert nahe null reguliert wird, der dem biologischen Gleichgewicht zwischen dem oxidierenden Milieu und dem reduzierenden Milieu entspricht.

11. Verfahren zur biologischen Behandlung gemäß Anspruch 10, **dadurch gekennzeichnet, dass** das Redoxpotential der schlammigen Gemische reguliert wird, um auf einem negativen Wert von ungefähr gleich -50 mV und einem positiven Wert von ungefähr gleich +50 mV, bezogen auf die Standardwasserstoffelektrode, gehalten zu werden.

12. Verfahren zur biologischen Behandlung gemäß Anspruch 10, **dadurch gekennzeichnet, dass** das Redoxpotential der schlammigen Gemische reguliert wird, um auf einem negativen Wert von ungefähr gleich -20 mV und einem positiven Wert von ungefähr gleich +20 mV, bezogen auf die Standardwasserstoffelektrode, gehalten wird.

13. Verfahren zur biologischen Behandlung gemäß einem der Ansprüche 1 bis 9, **dadurch gekennzeichnet, dass** das Redoxpotential der schlammigen Gemische reguliert wird, um in einem Intervall gehalten zu werden, das ungefähr plus oder minus 50 mV bezogen auf den vorbestimmten Potentialwert beträgt.

14. Verfahren zur biologischen Behandlung gemäß einem der Ansprüche 1 bis 9, **dadurch gekennzeichnet, dass** das Redoxpotential der schlammigen Gemische reguliert wird, um in einem Intervall gehalten zu werden, das ungefähr plus oder minus 20 mV bezogen auf den vorbestimmten Potentialwert beträgt.

15. Verfahren zur biologischen Behandlung gemäß einem der Ansprüche 1 bis 9, **dadurch gekennzeichnet, dass** das Redoxpotential der schlammigen Gemische reguliert wird, um mal um einen vorbestimmten negativen Redoxpotential-Wert, der zwischen ungefähr -150 mV und 0 mV, bezogen auf die Standardwasserstoffelektrode, liegt, und mal um einen vorbestimmten positiven Redoxpotential-Wert, der zwischen ungefähr 0 mV und +150 mV, bezogen auf die Standardwasserstoffelektrode, liegt, reguliert zu werden.

16. Verfahren zur biologischen Behandlung gemäß Anspruch 15, **dadurch gekennzeichnet, dass** das Redoxpotential der schlammigen Gemische nacheinander um jeden der beiden vorbestimmten Potential-Werte reguliert wird, um in einem Intervall gehalten zu werden, das ungefähr gleich plus oder minus 50 mV bezogen auf jeden vorbestimmten Wert ist.

17. Verfahren zur biologischen Behandlung gemäß einem der vorausgegangenen Ansprüche, **dadurch gekennzeichnet, dass** das Redoxpotential mit Messmitteln gemessen wird, die wenigstens eine Messelektrode aus Platin oder aus Gold und eine Referenzelektrode Ag/AgCl oder Hg/HgCl$_2$ aufweisen.

18. Verfahren zur biologischen Behandlung gemäß Anspruch 17, **dadurch gekennzeichnet, dass** die Messmittel einen Messsensor aufweisen, der mit einem Automaten verbunden ist, der das Redoxpotential reguliert.

19. Verfahren zur biologischen Behandlung gemäß einem der vorausgegangenen Ansprüche, **dadurch gekennzeichnet, dass** das Redoxpotential des schlammigen Gemischs kontinuierlich oder in Zyklen gepulst gemessen und reguliert wird.

20. Verfahren zur biologischen Behandlung gemäß einem der vorausgegangenen Ansprüche, **dadurch gekennzeichnet, dass** die Regulierung des Redoxpotentials durch eine Steuerung der Zufuhr von ungereinigtem Abwasser (10) erhalten wird, das in das Becken (7') für den Schritt (7) der Kontrolle des bakteriellen Wachstums einfließt.

21. Verfahren zur biologischen Behandlung gemäß einem der Ansprüche 1 bis 19, **dadurch gekennzeichnet, dass** die Regulierung des Redoxpotentials durch eine Regulierung des Zufuhrdurchsatzes von ungereinigtem Abwasser (10) erhalten wird, das in das Becken (7') für den Schritt (7) der Kontrolle des bakteriellen Wachstums einfließt.

22. Verfahren zur biologischen Behandlung gemäß einem der Ansprüche 5 bis 21, **dadurch gekennzeichnet, dass** die Regulierung des Redoxpotentials durch eine Steuerung des Abfließens der Flüssigkeit aus dem Kontrollbecken (7') zu wenigstens einem belüfteten Becken (4', 9') oder wenigstens einem nicht belüfteten Becken (8') erhalten wird.

23. Verfahren zur biologischen Behandlung gemäß einem der Ansprüche 5 bis 21, **dadurch gekennzeichnet, dass** die Regulierung des Redoxpotentials durch eine Steuerung des Abfließdurchsatzes der Flüssigkeit aus dem Kontrollbecken (7') zu wenigstens einem belüfteten Becken (4', 9') oder wenigstens einem nicht belüfteten Becken (8') erhalten wird.

24. Verfahren zur biologischen Behandlung gemäß einem der vorausgegangenen Ansprüche, **dadurch gekennzeichnet, dass** die Regulierung des Redoxpotentials durch eine aufeinanderfolgende Belüftung mit Luft oder reinem Sauerstoff des Kontrollbeckens (7') erhalten wird.

25. Verfahren zur biologischen Behandlung gemäß einem der vorausgegangenen Ansprüche, **dadurch gekennzeichnet, dass** die Regulierung des Redoxpotentials durch eine Steuerung der Zufuhr an schlammigen Gemischen, die in das Becken (7') für den Kontrollschritt (7) erneut in den Kreislauf eingebracht werden, von dem wenigstens einen belüfteten Becken (4', 9') zur biologischen Behandlung (4, 9), dem wenigstens einen nicht belüfteten Becken (8') zur biologischen Behandlung (8), dem wenigstens einen Klärbecken (5') und/oder wenigstens einen Eindickungsbecken (6') erhalten wird.

26. Verfahren zur biologischen Behandlung gemäß einem der vorausgegangenen Ansprüche 1 bis 24, **dadurch gekennzeichnet, dass** die Regulierung des Redoxpotentials durch eine Regulierung des Zufuhrdurchsatzes an schlammigen Gemischen, die in das Becken (7') für den Kontrollschritt (7) erneut in den Kreislauf eingebracht werden, von dem wenigstens einen belüfteten Becken (4', 9') zur biologischen Behandlung (4, 9), dem wenigstens einen nicht belüfteten Becken (8') zur biologischen Behandlung (8), dem wenigstens einen Klärbecken (5') und/oder wenigstens einen Eindickungsbecken (6') erhalten wird.

27. Verfahren zur biologischen Behandlung gemäß einem der vorausgegangenen Ansprüche, **dadurch gekennzeichnet, dass** der Kontrollschritt (7) ein Hinzufügen von Reagenzien, wie Natriumcarbonat, einer Säure oder einem Oxidans, aufweist.

28. Verfahren zur biologischen Behandlung gemäß einem der vorausgegangenen Ansprüche, **dadurch gekennzeichnet, dass** der Kontrollschritt (7) eine Dampfinjektion aufweist.

29. Verfahren zur biologischen Behandlung gemäß einem der vorausgegangenen Ansprüche, **dadurch gekennzeichnet, dass** der Kontrollschritt (7) einen Temperaturanstieg des Milieus aufweist.

30. Verfahren zur biologischen Behandlung gemäß einem der vorausgegangenen Ansprüche, **dadurch gekennzeichnet, dass** der Kontrollschritt (7) ein Abscheren des schlammigen Gemischs, zum Beispiel mittels einer Hochgeschwindigkeitsturbine oder eines Hydroejektors, aufweist.

31. Verfahren zur biologischen Behandlung gemäß einem der vorausgegangenen Ansprüche, **dadurch gekennzeichnet, dass** die Zirkulation der schlammigen Gemische zwischen wenigstens zwei Schritten der biologischen Behandlung (4, 8, 9) und/oder zwischen dem Kontrollschritt (7) und wenigstens einem Schritt der biologischen Behandlung (4, 8, 9) in einer Richtung oder der entgegengesetzten durchgeführt werden kann.

32. Verfahren zur biologischen Behandlung gemäß einem der vorausgegangenen Ansprüche, **dadurch gekennzeichnet, dass** der Kontrollschritt (7) in wenigstens einem Pufferbecken einer Behandlungsanlage durchgeführt wird.

Figure 1

**Figure 2**

**Figure 3**

EP 1 486 465 B1

**Figure 4**

**Figure 5**

**EP 1 486 465 B1**

**RÉFÉRENCES CITÉES DANS LA DESCRIPTION**

**Documents brevets cités dans la description**

- US 4915840 A
- US 5858222 A
- FR 2774980 A